# EUROPEAN PATENT APPLICATION

(11) **EP 4 693 081 A1**
(43) Date of publication of application: **11.02.2026**
(21) Application number: 23931936.1
(22) Date of filing: 03.04.2023
(51) Int. Cl.: G06F 21/32, G06F 21/33

(54) **TERMINAL, SYSTEM, METHOD FOR CONTROLLING TERMINAL, AND STORAGE MEDIUM**

(71) Applicant: NEC Corporation, 108-8001 Tokyo (JP)
(72) Inventor: OTANI, Takumi, Tokyo 108-8001 (JP); SASAMOTO, Takeshi, Tokyo 108-8001 (JP); KUROSE, Haruka, Tokyo 108-8001 (JP)
(74) Representative: Betten & Resch
(86) International application number: PCT/JP2023/013866
(87) International publication number: WO 2024/209523

(57) **Abstract**

To provide a terminal that easily realizes system registration of information necessary for providing a service using biometric authentication. The terminal includes an acquisition means and a transmission means. The acquisition means acquires operation information necessary for a user to receive a service using biometric authentication from an application installed in own apparatus. The transmission means transmits a token registration request including the acquired operation information and biometric information of the user to a server apparatus.

## Description

### [Technical Field]

The present invention relates to a terminal, a system, a control method of a terminal, and a storage medium.

### [Background Art]

There exists a technology related to biometric authentication and provision of services using the biometric authentication.

For example, Patent Literature 1 describes that a system, a server apparatus, an authentication method, and a storage medium are provided, which contribute to an improvement in the accuracy of biometric authentication. The system disclosed in Patent Literature 1 includes a server apparatus and at least one or more authentication terminals. The server apparatus stores, in association with each other, an ID and biometric information of each of a plurality of users. The at least one or more authentication terminals retain an ID list that stores an ID of at least one or more residents who stay in a predetermined area. In a case where authentication of a person to be authenticated becomes necessary, the at least one or more authentication terminals transmit an authentication request including biometric information of the person to be authenticated and the ID list to the server apparatus. The server apparatus extracts, from among the IDs of the plurality of users, an ID included in the ID list, and performs biometric authentication using biometric information corresponding to the extracted ID and the biometric information included in the authentication request.

Patent Literature 2 describes that an authentication server is provided, which improves the convenience of a user who has been granted points. The authentication server disclosed in Patent Literature 2 includes a user registration unit, a point management unit, and a database. The user management unit acquires a first ID for uniquely identifying a user and biometric information used for biometric authentication of the user. The point management unit manages a first point granted to the user by a service business operator that provides a service to the user using a result of biometric authentication, and a second point granted to the user by an online business operator that provides an online service to the user. The database stores, in association with each other, the first ID, the biometric information, and a total value of the first and second points.

### [Citation List]

### [Patent Literature]

[PTL 1] Japanese Patent No. 7036300
[PTL 2] International Publication No. WO2022/137954

### [Summary of Invention]

### [Technical Problem]

In the systems disclosed in Patent Literature 1 and Patent Literature 2, it is necessary to register, in a server, biometric information of a user who receives a service using biometric authentication, and information necessary for providing the service using the biometric information. Here, how the server acquires the information necessary for providing the service using the biometric information becomes an issue.

For example, as the information necessary for providing a service using biometric information, there is exemplified information managed by systems of an airport company (airport operating company) or an airline company (for example, a membership ID or boarding pass information). In a case where the server acquires such information from systems of an airport company or the like, the system on the side of the airport company needs to support provision of the information. Here, the information necessary for providing a service using biometric information is diverse, and modification of each system that retains such information involves a significant cost. As a result, the dissemination of services using biometric authentication is hindered.

It is a main object of the present invention to provide a terminal, a system, a control method of a terminal, and a storage medium that contribute to easily realizing system registration of information necessary for providing a service using biometric authentication.

### [Solution to Problem]

According to a first aspect of the present invention, there is provided a terminal including: an acquisition means that acquires operation information necessary for a user to receive a service using biometric authentication from an application installed in own apparatus; and a transmission means that transmits a token registration request including the acquired operation information and biometric information of the user to a server apparatus.

According to a second aspect of the present invention, there is provided a system including: a server apparatus; and a terminal possessed by a user, and wherein the terminal acquires operation information necessary for the user to receive a service using biometric authentication from an application installed in own apparatus, and transmits a token registration request including the acquired operation information and biometric information of the user to the server apparatus, and wherein the server apparatus, in response to a reception of the token registration request, associates and stores the biometric information of the user and the operation information in a first database.

According to a third aspect of the present invention, there is provided a control method of a terminal, the control method including: acquiring operation information necessary for a user to receive a service using biometric authentication from an application installed in own apparatus; and transmitting a token registration request including the acquired operation information and biometric information of the user to a server apparatus.

According to a fourth aspect of the present invention, there is provided a computer-readable storage medium storing a program causing a computer mounted on a terminal to perform processing for: acquiring operation information necessary for a user to receive a service using biometric authentication from an application installed in own apparatus; and transmitting a token registration request including the acquired operation information and biometric information of the user to a server apparatus.

### [Advantageous Effects of Invention]

The individual aspects of the present invention provide a terminal, a system, a control method of a terminal, and a storage medium that contribute to easily realizing system registration of information necessary for providing a service using biometric authentication. It should be noted that the advantageous effect of the present invention is not limited to the above advantageous effect. The present invention may provide other advantageous effects, instead of or in addition to the above advantageous effect.

### [Brief Description of the Drawings]

[Fig. 1] Fig. 1 is a diagram illustrating an outline of an example embodiment.
[Fig. 2] Fig. 2 is a flowchart illustrating an operation of an example embodiment.
[Fig. 3] Fig. 3 is a diagram illustrating an example of a schematic configuration of an information processing system according to a first example embodiment.
[Fig. 4] Fig. 4 is a diagram illustrating an operation of the information processing system according to the first example embodiment.
[Fig. 5] Fig. 5 is a diagram illustrating an application installed in a terminal according to the first example embodiment.
[Fig. 6] Fig. 6 is a diagram illustrating an example of a display of the terminal according to the first example embodiment.
[Fig. 7] Fig. 7 is a diagram illustrating an example of a display of the terminal according to the first example embodiment.
[Fig. 8] Fig. 8 is a diagram illustrating an operation of the information processing system according to the first example embodiment.
[Fig. 9] Fig. 9 is a diagram illustrating an operation of the information processing system according to the first example embodiment.
[Fig. 10] Fig. 10 is a diagram illustrating an example of a processing configuration of the terminal according to the first example embodiment.
[Fig. 11] Fig. 11 is a flowchart illustrating an example of an operation of a token control unit according to the first example embodiment.
[Fig. 12] Fig. 12 is a diagram illustrating an example of a processing configuration of an airport terminal according to the first example embodiment.
[Fig. 13] Fig. 13 is a diagram illustrating an example of a display of the airport terminal according to the first example embodiment.
[Fig. 14] Fig. 14 is a diagram illustrating an example of a processing configuration of a server apparatus according to the first example embodiment.
[Fig. 15] Fig. 15 is a diagram illustrating an example of a user management database according to the first example embodiment.
[Fig. 16] Fig. 16 is a flowchart illustrating an example of an operation of the token control unit according to the first example embodiment.
[Fig. 17] Fig. 17 is a flowchart illustrating an example of an operation of an authentication unit according to the first example embodiment.
[Fig. 18] Fig. 18 is a diagram illustrating an example of table information according to the first example embodiment.
[Fig. 19] Fig. 19 is a diagram illustrating an example of a processing configuration of an authentication terminal according to the first example embodiment.
[Fig. 20] Fig. 20 is a sequence diagram illustrating an example of an operation of the information processing system according to the first example embodiment.
[Fig. 21] Fig. 21 is a sequence diagram illustrating an example of an operation of the information processing system according to the first example embodiment.
[Fig. 22] Fig. 22 is a diagram illustrating an example of a display of the terminal according to a second example embodiment.
[Fig. 23] Fig. 23 is a diagram illustrating an example of a behavior history management database according to a third example embodiment.
[Fig. 24] Fig. 24 is a diagram illustrating an example of a processing configuration of the server apparatus according to the third example embodiment.
[Fig. 25] Fig. 25 is a diagram illustrating an example of a hardware configuration of the terminal according to the present application disclosed.

### [Example Embodiment]

First, an outline of an example embodiment will be described. In the following outline, various components are denoted by reference characters for the sake of convenience. That is, the following reference characters are used as examples to facilitate the understanding of the present invention. Thus, the description of the outline is not intended to impose any limitations. In addition, unless otherwise specified, an individual block illustrated in the drawings represents a configuration of a functional unit, not a hardware unit. An individual connection line between blocks in the drawings signifies both one-way and two-way directions. An arrow schematically illustrates a principal signal (data) flow and does not exclude bidirectionality. In the present description and drawings, elements that can be described in a like way will be denoted by a like reference character, and redundant description thereof will be omitted as needed.

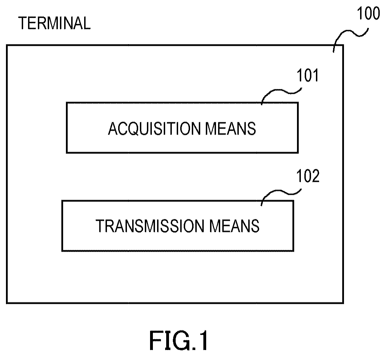

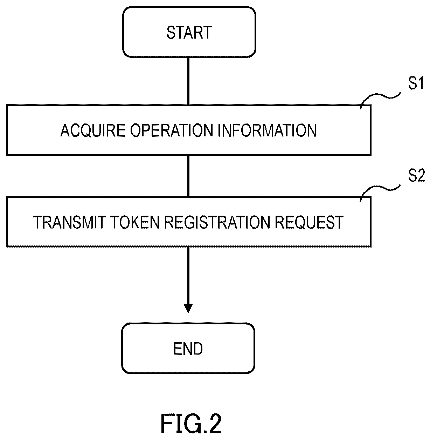

A terminal 100 according to an example embodiment includes an acquisition means 101 and a transmission means 102 (see Fig. 1). The acquisition means 101 acquires operation information necessary for a user to receive a service using biometric authentication from an application installed in own apparatus (step S1 in Fig. 2). The transmission means 102 transmits a token registration request including the acquired operation information and biometric information of the user to a server apparatus (see step S2).

The terminal 100 acquires operation information necessary for receiving a service using biometric authentication from an application installed in the own apparatus (a smartphone). The terminal 100 transmits the acquired operation information and the biometric information of the user to the server apparatus and requests registration of a token. By adopting such a configuration, it is not necessary to transmit operation information, which is centrally managed by a system of a service provider, from the system to the server apparatus. As a result, system registration of information necessary for providing a service using biometric authentication can be easily achieved without requiring significant changes or the like to systems of individual service providers.

Hereinafter, specific example embodiments will be described in more detail with reference to drawings.

### [First Example Embodiment]

A first example embodiment will be described in more detail with reference to drawings.

### [System Configuration]

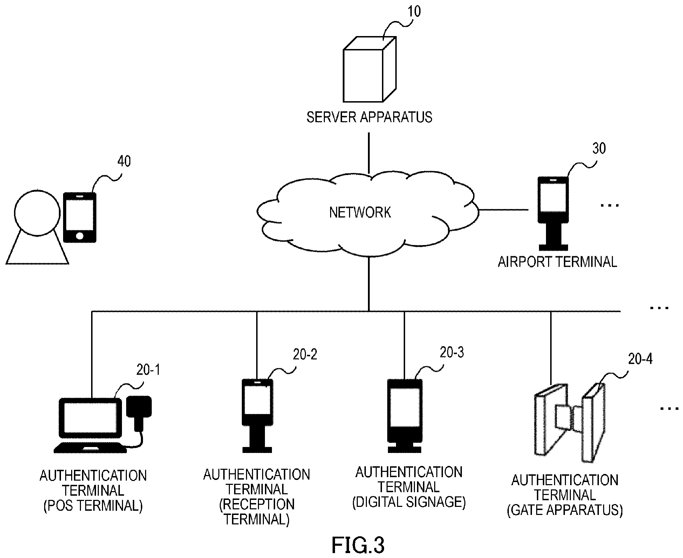

Fig. 3 is a diagram illustrating an example of a schematic configuration of an information processing system (authentication system) according to the first example embodiment. The information processing system shown in Fig. 3 includes a server apparatus 10, a plurality of authentication terminals 20-1 to 20-4, and an airport terminal 30.

It should be noted that, in the following description, the authentication terminals 20-1 to 20-4 are simply referred to as "authentication terminal 20" in a case where there is no particular reason to distinguish them.

The server apparatus 10 is an apparatus that provides a service using biometric authentication to airport users. The server apparatus 10 is operated by any organization or the like. For example, the server apparatus 10 is operated by an airport company, an airline company, a public institution such as a national government or a local government, or a private company entrusted by an airport company, a public institution, or the like.

The server apparatus 10 may be installed within an airport or may be installed in a cloud on a network.

The authentication terminal 20 is a terminal (touch point) that serves as an interface for a user who receives a service using biometric authentication. A business operator (service provider) that provides a service using biometric authentication to users installs the authentication terminal 20, which corresponds to the provided service, in various locations within the airport. The user receives the provision of a service using biometric authentication via the authentication terminal 20.

For example, the authentication terminal 20-1 is a POS (Point of Sale) terminal installed in a shop or the like. For example, an airport company installs the authentication terminal 20-1 (POS terminal) in a shop or the like. For example, the airport company provides a settlement service using biometric authentication to its own members (hereinafter also referred to as airport members) via the authentication terminal 20-1. For example, the authentication terminal 20-1 performs control related to face recognition-based payment or the like.

The authentication terminal 20-2 is, for example, a reception terminal installed in a lounge or the like. For example, an airport company installs the authentication terminal 20-2 (reception terminal) at the entrance (reception) of a lounge. For example, the airport company permits its own members (airport members) to use the lounge free of charge. For example, the authentication terminal 20-2 notifies a staff member or the like waiting at the lounge reception whether or not the user identified by biometric authentication is qualified to use the lounge free of charge.

The authentication terminal 20-3 is, for example, a digital signage installed in a lobby or the like within an airport. For example, an airline company installs the authentication terminal 20-3 (digital signage) in a departure or arrival lobby or the like. For example, the airline company provides various types of information to its own members (hereinafter also referred to as airline members). For example, the authentication terminal 20-3 guides the user identified by biometric authentication to the location of a boarding gate or provides information related to sightseeing spots.

The authentication terminal 20-4 is, for example, a gate apparatus installed at each boarding gate. For example, an airline company installs the authentication terminal 20-4 (gate apparatus). The authentication terminal 20-4 refuses passage of the user in a case where the user identified by biometric authentication is not qualified to board the aircraft.

The airport terminal 30 is a terminal installed within an airport. The user operates the airport terminal 30 to perform check-in procedures or the like. In addition, the airport terminal 30 includes a function related to token registration of the user. Specifically, the airport terminal 30 requests the server apparatus 10 to perform token registration (token issuance) for the user. Details related to the token will be described below.

The user possesses a terminal 40. Various applications are installed in the terminal 40. For example, an airport application used by a member of an airport company and an airline application used by a member of an airline company are installed in the terminal 40.

The user enjoys various services and benefits provided by the airport company using the airport application. For example, the user makes a hotel reservation in cooperation with the airport company, checks flight information, or the like, using the airport application. Alternatively, the user registers credit card information or the like in the system of the airport company using the airport application. The user is able to make purchases (for example, online shopping) using the registered credit card information.

In addition, the user performs purchase of an airline ticket, check-in procedures, or the like using the airline application. For example, the user manages a boarding pass using the airline application.

Furthermore, the terminal 40 includes a function related to the token registration described above.

Each apparatus included in the information processing system shown in Fig. 3 (such as the server apparatus 10, the authentication terminal 20, or the like) is configured to be capable of communicating with each other via a network. Specifically, the server apparatus 10 and the authentication terminals 20 are connected by wired or wireless communication means and are configured to be able to communicate with each other.

The configuration illustrated in Fig. 3 is an example and does not limit the configuration and so on of the information processing system disclosed in the present application. For example, the information processing system may include two or more server apparatuses 10. In addition, the number of authentication terminals 20 included in the information processing system is not limited to four. The information processing system only needs to include at least one or more authentication terminals 20.

In addition, the authentication terminal 20 shown in Fig. 3 is an example, and is not intended to limit the installing entity, the installation purpose, or the like of the authentication terminal 20. The authentication terminals 20 used for purposes other than POS terminals, reception terminals, digital signage, or gate apparatuses may be installed in the airport. Alternatively, digital signage installed by an airport company and digital signage installed by an airline company may coexist.

### [Schematic Operation of System]

Subsequently, a schematic operation of the information processing system will be described.

### <Token Registration>

As described above, the airport terminal 30 and the terminal 40 include a function related to token registration.

A token is information necessary for the server apparatus 10 to provide a service using biometric authentication to a user, and is information that is registered in the system. Specifically, the token is composed of a combination of biometric information of the user and operation information, and is stored in a database of the server apparatus 10.

It should be noted that examples of the biometric information include data (feature values) calculated from physical features unique to an individual, such as a face, a fingerprint, a voiceprint, a vein, a retina, or an iris pattern of an eye. Alternatively, the biometric information may be image data such as a face image or fingerprint image. The biometric information may be anything that includes physical characteristics of a user as information. In the present application, a case in which biometric information about a "face" of a person (a face image or a feature value generated from the face image) is used will be described.

Business information is information necessary for a service provider (for example, an airport company or an airline company) to provide a service to a user. The operation information varies depending on the service provider and the type of service provided by the service provider.

For example, in a case where a face recognition-based payment service is provided to an airport member, a membership ID of the airport company becomes the operation information. It should be noted that, in the following description, the membership ID of the airport company is referred to as "airport member ID." Alternatively, in a case where a lounge free-use service is provided to an airport member, the airport member ID also becomes the operation information.

Alternatively, in a case where beneficial information is provided to an airline member, a membership ID of the airline company and boarding pass information become the operation information. It should be noted that, in the following description, the membership ID of the airline company is referred to as "airline member ID." Alternatively, in a case where the user boards an aircraft by passing through the authentication terminal 20-4, the boarding pass information becomes the operation information.

The user is required to register a token in the system before receiving the provision of a service using biometric authentication at the airport. Specifically, the user requests the server apparatus 10 to register a token by using the airport terminal 30 installed in the airport or the terminal 40 possessed by the user.

First, a case where the user requests the server apparatus 10 to register a token using the airport terminal 30 will be described.

In a case where the user desires token registration (token issuance), the airport terminal 30 acquires biometric information of the user. For example, the airport terminal 30 captures an image of the user in front of it to acquire a face image.

In addition, the airport terminal 30 acquires biometric information from an identity verification document possessed by the user. Specifically, the airport terminal 30 acquires a face image from an identity verification document in which an IC (Integrated Circuit) is embedded, such as a passport, a driver's license, or a My Number Card.

The airport terminal 30 performs personal identification using biometric information acquired by photographing the user and biometric information acquired from the identity verification document. The airport terminal 30 performs personal identification (one-to-one authentication) using the two pieces of biometric information (face images).

In a case where personal identification is successful, the airport terminal 30 acquires operation information necessary for providing a service using biometric authentication. For example, the airport terminal 30 acquires, from the user, membership information of the airport company (airport member ID), membership information of the airline company (for example, airline member ID), boarding pass information (information obtained from the boarding pass), or the like.

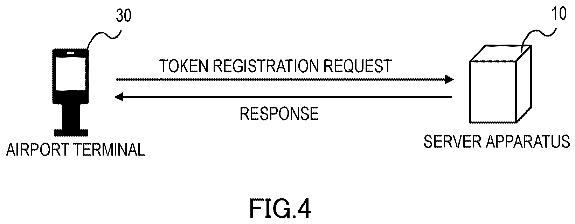

The airport terminal 30 transmits a "token registration request" including biometric information of the user (for example, a face image obtained by photographing or a face image read from an identity verification document) and operation information to the server apparatus 10 (see Fig. 4).

Upon receiving a token registration request, the server apparatus 10 registers (issues) a token using the biometric information and operation information included in the token registration request. The server apparatus 10 registers the information (biometric information and operation information) acquired from the airport terminal 30 in a user management database. It should be noted that details of the user management database in which the server apparatus 10 stores tokens will be described below.

The server apparatus 10 notifies the airport terminal 30 of a processing result for the token registration request. In a case where the token is successfully registered, the server apparatus 10 transmits a positive response indicating that fact to the airport terminal 30. In a case where the token registration fails, the server apparatus 10 transmits a negative response indicating that fact to the airport terminal 30.

The airport terminal 30 notifies the user of a result of the token registration request.

Subsequently, a case where the user requests the server apparatus 10 to register a token using the terminal 40 will be described.

As described above, various applications are installed in the terminal 40 of the user. For example, the above-described airport application or airline application, or the like is installed in the terminal 40.

In addition, the user installs an application for managing and controlling the registration of a token in the terminal 40. For example, the user downloads a token control application from an application store or the like and installs the token control application in the terminal 40.

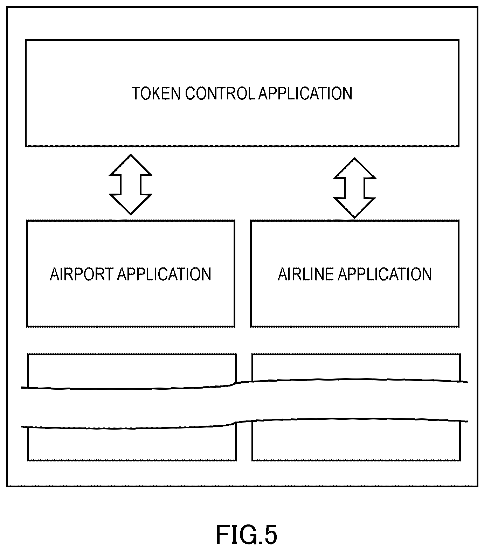

For example, as shown in Fig. 5, various applications such as a token control application, an airport application, and an airline application are installed in the terminal 40. The applications installed in the terminal 40 are configured to be capable of transmitting and receiving data with each other.

The token control application is capable of cooperating with other applications. Specifically, the token control application is capable of receiving data from other applications or transmitting data to other applications.

Here, an application installed in the terminal 40 stores and manages information necessary for the execution of the application itself. For example, the airport application stores and manages an airport member ID of the user. Alternatively, the airline application stores and manages an airline member ID, boarding pass information, or the like of the user.

The airport application, the airline application, or the like transmits operation information corresponding to the desired service to the token control application in a case where the user desires to receive a service using biometric authentication. For example, in a case where the user desires to purchase a product at an airport shop using face recognition-based payment, the airport application transmits an airport member ID to the token control application.

Alternatively, in a case where the airport application or the airline application has a service using biometric authentication that can be proposed to the user, the service that can be proposed is presented to the user. In a case where the user desires to receive the proposed service, the airline application or the like transmits operation information corresponding to the desired service to the token control application.

For example, in a case where the airline application acquires a boarding pass from a system of the airline company, the airline application proposes passing through a gate apparatus using biometric authentication. The airport application guides the user that the user is able to pass through the gate apparatus and board an aircraft without presenting documents (media) such as a boarding pass to staff members of the airline company or the like. It should be noted that, in the following description, passing through a gate apparatus without presenting a boarding pass or the like is referred to as "face pass." In a case where the user accepts the proposal, the airline application transmits boarding pass information to the token control application.

In a case where operation information is acquired from another application (a push notification is received from another application), the token control application acquires biometric information of the user. For example, the token control application photographs the user through so-called self-photographing and acquires a face image of the user.

Thereafter, the token control application acquires biometric information from an identity verification document possessed by the user. The token control application reads out a face image from an IC chip of a passport, a driver's license, a My Number Card, or the like.

The token control application performs personal identification (one-to-one authentication) using two pieces of biometric information.

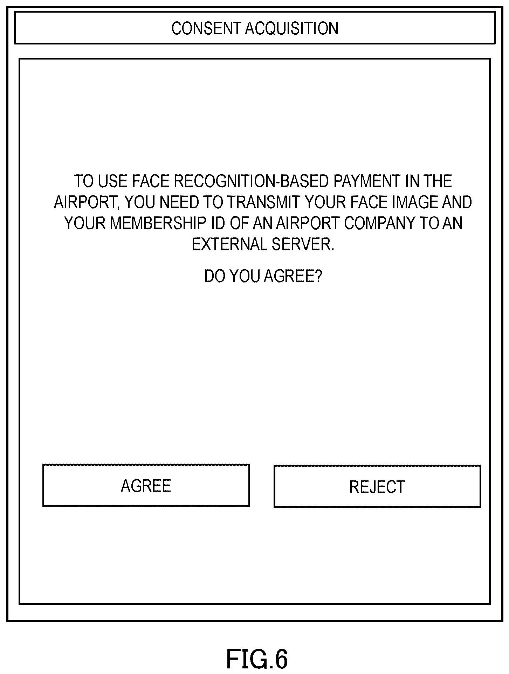

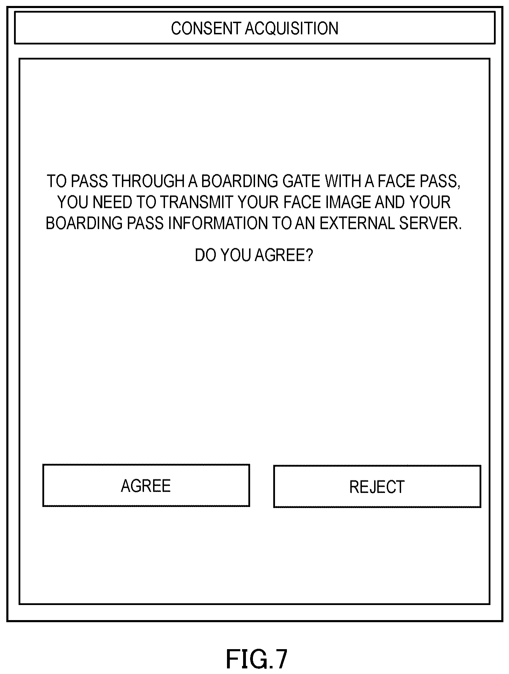

In a case where personal identification succeeds, the token control application acquires consent to provide personal information to a third party (the server apparatus 10). For example, the token control application acquires consent of the user to the third-party provision of personal information (biometric information and operation information) using a GUI (Graphical User Interface) as shown in Fig. 6 or Fig. 7.

It should be noted that Fig. 6 is an example of a GUI in a case where the token control application has acquired operation information for face recognition-based payment from the airport application. Fig. 7 is an example of a GUI in a case where the token control application has acquired operation information for face-pass from the airline application.

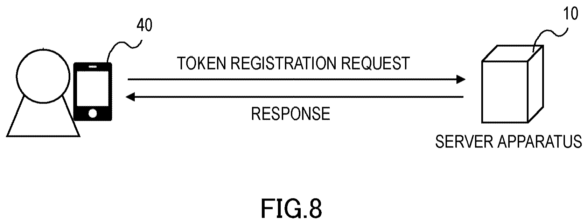

After acquiring consent of the user to the third-party provision of biometric information and operation information, the token control application transmits a "token registration request" including the biometric information and the operation information of the user to the server apparatus 10 (see Fig. 8).

The server apparatus 10 processes the token registration request received from the terminal 40 in the same manner as the token registration request received from the airport terminal 30. The server apparatus 10 notifies the terminal 40 of the processing result of the token registration request (token registration success, token registration failure). The server apparatus 10 transmits a response (positive response, negative response) to the token registration request to the terminal 40.

The terminal 40 (the token control application) notifies the user of the result of the token registration request.

As described above, the terminal 40 acquires operation information necessary for the user to receive the provision of a service using biometric authentication from an application installed in the own apparatus. The terminal 40 transmits a token registration request including the acquired operation information and the biometric information of the user to the server apparatus 10. The server apparatus 10, in response to the reception of the token registration request, associates and stores the biometric information and the operation information of the user in a first database (a user management database).

### <Provision of Service>

A user receives the provision of a service using biometric authentication via the authentication terminal 20. The user who wishes to receive a service using biometric authentication moves, for example, to a position in front of the authentication terminal 20.

The authentication terminal 20 acquires biometric information of the user in accordance with an operation (instruction) by an employee of a service provider or by the user. Alternatively, the authentication terminal 20 automatically acquires biometric information of the user who is in front of the terminal 20.

For example, in a case where the user wishes to purchase a product through face recognition-based payment, the authentication terminal 20-1 (POS terminal) photographs the user and acquires a face image of the user in accordance with an operation performed by a shop clerk or the user (product purchaser). Alternatively, in a case where the user wishes to enter a lounge, the authentication terminal 20-2 (reception terminal) photographs the user and acquires a face image of the user in accordance with an operation performed by a staff member or the like stationed at the lounge reception.

Alternatively, in a case where the authentication terminal 20-3 (digital signage) or the authentication terminal 20-4 (gate apparatus) detects the user in front of the own apparatus, the terminal photographs the user and acquires a face image.

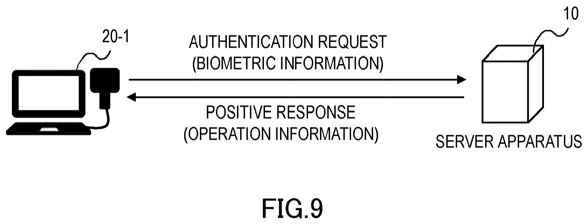

The authentication terminal 20 transmits an "authentication request" including the acquired biometric information and a terminal ID to the server apparatus 10 (see Fig. 9).

The terminal ID is an ID for identifying the authentication terminal 20. A MAC (Media Access Control) address or an IP (Internet Protocol) address of the authentication terminal 20 may be used for the terminal ID.

It should be noted that the terminal ID is shared between the server apparatus 10 and each authentication terminal 20 by any desired method. For example, a system administrator determines the terminal ID and sets the determined terminal ID in the server apparatus 10. In addition, the system administrator sets the determined terminal ID in each authentication terminal 20.

The server apparatus 10, upon receiving the authentication request, performs biometric authentication using the biometric information included in the authentication request and the biometric information registered in the user management database. The server apparatus 10 performs matching processing using these pieces of biometric information (1-to-N matching, where N is a positive integer; the same applies hereinafter), and identifies the person to be authenticated.

In addition, the server apparatus 10 identifies the authentication terminal 20 that is the source of the authentication request (identifies the type of the authentication terminal 20) using the terminal ID included in the authentication request. The server apparatus 10 transmits operation information corresponding to the identified authentication terminal 20 (operation information of the person to be authenticated identified through the matching processing) to the authentication terminal 20.

For example, in a case where the authentication request is received from the authentication terminal 20-1 (POS terminal) or the authentication terminal 20-2 (reception terminal), the server apparatus 10 notifies the authentication terminal 20-1 of an airport member ID of the airport company.

Alternatively, in a case where the authentication request is received from the authentication terminal 20-3 (digital signage), the server apparatus 10 transmits an airline member ID or boarding pass information to the authentication terminal 20-3. Alternatively, in a case where the authentication request is received from the authentication terminal 20-4 (gate apparatus), the server apparatus 10 notifies the authentication terminal 20-4 of boarding pass information or the like.

The server apparatus 10 transmits a response to the authentication request to the authentication terminal 20.

Specifically, in a case where the matching processing is successful and operation information corresponding to the authentication terminal 20 is registered in the user management database, the server apparatus 10 transmits a positive response indicating authentication success to the authentication terminal 20. More specifically, the server apparatus 10 transmits a positive response including operation information corresponding to the authentication terminal 20 that is the source of the authentication request to the authentication terminal 20.

In a case where the matching processing fails or operation information corresponding to the authentication terminal 20 is not registered in the user management database, the server apparatus 10 transmits a negative response indicating authentication failure to the authentication terminal 20.

In a case where a negative response (authentication failure) is received, the authentication terminal 20 notifies the user, a staff member, or the like of that fact.

In a case where a positive response (authentication success) is received, the authentication terminal 20 provides a service to the user using the operation information acquired from the server apparatus 10.

For example, the authentication terminal 20-1 (POS terminal) transmits the airport member ID acquired from the server apparatus 10 and settlement information (the product name and purchase amount of the product purchased by the user) to a system of an airport company (not illustrated). The system of the airport company (a system that provides various services to its own members) identifies the purchaser of the product using the airport member ID, and performs a settlement process using credit card information and settlement information of the identified purchaser.

Alternatively, the authentication terminal 20-2 (reception terminal) transmits the airport member ID acquired from the server apparatus 10 to the airport company system. The airport company system transmits membership information (for example, a member's name or the like) stored in association with the airport member ID to the authentication terminal 20-2. The authentication terminal 20-2 notifies a staff member or the like that the person to be authenticated is a member of the airport company, together with the acquired membership information. The staff member permits the person to be authenticated to use the lounge free of charge.

Alternatively, the authentication terminal 20-3 (digital signage) transmits the airline member ID acquired from the server apparatus 10 to an airline company system (not illustrated), and acquires corresponding membership information. The authentication terminal 20-3 displays information provision using the acquired membership information (for example, flight information related to an aircraft scheduled to be boarded by the user). Alternatively, the authentication terminal 20-3 performs information provision based on boarding pass information acquired from the server apparatus 10. For example, the authentication terminal 20-3 displays the location of a boarding gate of an aircraft to be boarded by the user.

Alternatively, the authentication terminal 20-4 (gate apparatus) determines, using boarding pass information acquired from the server apparatus 10, whether or not the user has authorization to board an aircraft parked beyond the authentication terminal 20-4. In a case where the authentication terminal 20-4 acquires, from the server apparatus 10, boarding pass information corresponding to an aircraft for which the terminal itself determines boarding eligibility, the authentication terminal 20-4 opens the gate and permits passage of the user. In a case where the authentication terminal 20-4 is unable to acquire, from the server apparatus 10, boarding pass information corresponding to an aircraft for which the terminal itself determines boarding eligibility, the authentication terminal 20-4 closes the gate and denies passage of the user.

As described above, the server apparatus 10 receives an authentication request including biometric information of a person to be authenticated from the authentication terminal 20. The server apparatus 10 specifies the person to be authenticated by matching processing using the biometric information included in the received authentication request and the biometric information stored in a user management database. The server apparatus 10 transmits, to the authentication terminal 20, operation information corresponding to the authentication terminal 20 among at least one or more pieces of operation information of the person to be authenticated, which are stored in the user management database.

Next, details of the individual apparatuses included in the information processing system according to the first example embodiment will be described.

### [Terminal]

Examples of the terminal 40 include a portable terminal device such as a smartphone, a portable phone, a game console, or a tablet and a computer (a personal computer or a laptop computer).

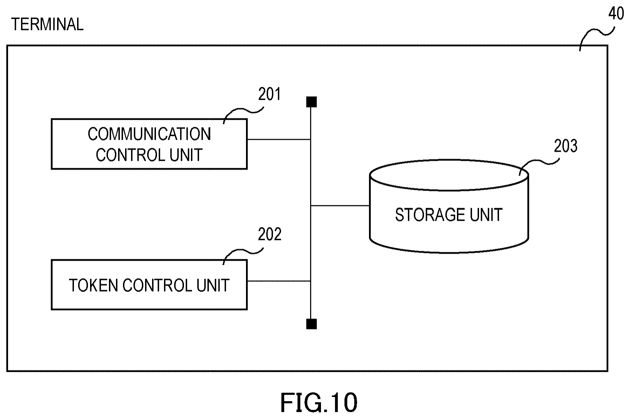

Fig. 10 is a diagram illustrating an example of a processing configuration (processing modules) of the terminal 40 according to the first example embodiment. Referring to Fig. 10, the terminal 40 includes a communication control unit 201, a token control unit 202, and a storage unit 203.

The communication control unit 201 is means for controlling communication with other apparatuses. For example, the communication control unit 201 receives data (packets) from the server apparatus 10. In addition, the communication control unit 201 transmits data to the server apparatus 10. The communication control unit 201 gives data received from other apparatuses to other processing modules. The communication control unit 201 transmits data acquired from other processing modules to other apparatuses. In this way, other processing modules transmit and receive data to and from other apparatuses via the communication control unit 201. The communication control unit 201 includes a function as a receiving unit that receives data from other apparatuses and a function as a transmitting unit that transmits data to other apparatuses.

The token control unit 202 is means for performing control related to a token in the terminal 40. Specifically, the token control unit 202 requests registration of a token to the server apparatus 10. The token control unit 202 is a module that implements the above-described token control application.

The token control unit 202 requests the server apparatus 10 to register a token that is necessary for a user to receive services using biometric authentication inside or outside the airport.

The token control unit 202 includes a function as acquisition means for acquiring operation information necessary for the user to receive services using biometric authentication from an application installed in the own apparatus. In addition, the token control unit 202 includes a function as transmission means for transmitting a token registration request including the acquired operation information and biometric information of the user to the server apparatus.

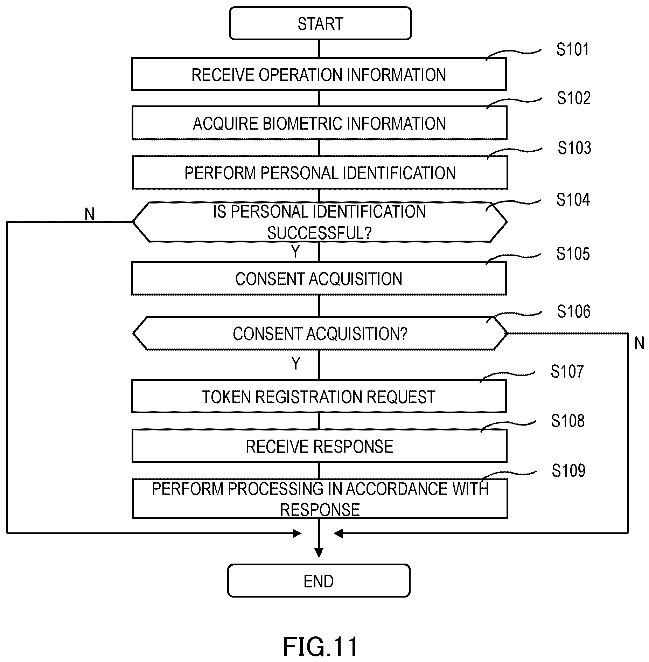

Fig. 11 is a flowchart illustrating an example of an operation of the token control unit 202 according to the first example embodiment. With reference to Fig. 11, the operation of the token control unit 202 will be described.

The token control unit 202 receives operation information from another application (step S101). Specifically, the token control unit 202 acquires the operation information via push notification from the other application.

For example, the token control unit 202 acquires an airport member ID from an airport application. Alternatively, the token control unit 202 acquires an airline member ID from an airline application.

The token control unit 202 acquires the operation information using, for example, an inter-application cooperation technique called Deep Link. Alternatively, the token control unit 202 may acquire the operation information using a predetermined API (Application Programming Interface). For example, the token control unit 202 receives the operation information from another application using an API defined by the token control application.

In a case where the operation information is received, the token control unit 202 acquires biometric information for personal identification (step S102). Specifically, the token control unit 202 acquires a face image of the user by capturing an image of the user.

In addition, the token control unit 202 acquires biometric information from an identity verification document possessed by the user. For example, the token control unit 202 acquires a face image from an IC chip embedded in an identity verification document, such as a passport, a driver's license, or a My Number Card. The token control unit 202 communicates with an IC chip using NFC (Near Field Communication) and acquires a face image stored in the IC chip.

The token control unit 202 performs personal identification (step S103). Specifically, the token control unit 202 performs personal identification using a face image obtained by capturing an image of the user and a face image read from the IC chip of an identity verification document. The token control unit 202 determines whether or not the two pieces of biometric information substantially match, and performs personal identification.

The token control unit 202 generates a feature value from each of the face image acquired by capturing and the face image acquired from the identity verification document.

It should be noted that since an existing technology can be used to generate the feature values, a detailed description thereof will be omitted. For example, the token control unit 202 extracts the eyes, nose, mouth, or the like from the face image as feature points. Thereafter, the token control unit 202 calculates, as feature values, the positions of each feature point and the distances between the respective feature points (generating a feature vector composed of a plurality of feature values).

Next, the token control unit 202 performs authentication processing (one-to-one authentication) using the two generated feature values. Specifically, the token control unit 202 calculates a similarity between the corresponding face images using the two feature values. The token control unit 202 determines whether or not the two images are face images of the same individual, based on the result of threshold processing applied to the calculated similarity. Note that the chi-squared distance, the Euclidean distance, or the like can be used for the individual similarity. A longer distance represents a lower similarity, and a shorter distance represents a higher similarity.

In a case where the similarity is greater than a predetermined value (the distance is shorter than the predetermined value), the token control unit 202 determines that the personal identification has succeeded. In a case where the similarity is equal to or less than the predetermined value, the token control unit 202 determines that the personal identification has failed.

It should be noted that the token control unit 202 may perform "liveness authentication" for verifying that the user actually exists. Specifically, the token control unit 202, after successful authentication (matching) using the face image acquired by photographing and the face image read out from the identity verification document, gives the user (the person to be authenticated) an instruction for a predetermined action and determines whether or not the user follows the instruction. For example, the token control unit 202 gives an instruction such as "Please close your right eye" and determines, based on whether or not the user follows the instruction, whether the user actually exists.

In a case where the personal identification fails (step S104, No branch), the token control unit 202 terminates the processing related to token registration. In this case, the token control unit 202 may notify the user that the token cannot be registered (issued) due to the failure of personal identification.

In a case where the personal identification succeeds (step S104, Yes branch), the token control unit 202 acquires the consent of the user for third-party provision of personal information (step S105).

The token control unit 202 acquires the consent of the user using a GUI corresponding to the type (content) of the acquired operation information and the application that provides the operation information. For example, the token control unit 202 acquires the consent of the user for third-party provision of personal information using a GUI as shown in Fig. 6 or Fig. 7.

In a case where the consent related to the provision of personal information (biometric information and operation information) is not obtained (step S106, No branch), the token control unit 202 terminates the processing related to token registration. In this case, the token control unit 202 may notify the user that the token cannot be registered unless the personal information is provided to a third party.

In a case where consent to provide personal information is obtained (step S106, Yes branch), the token control unit 202 transmits a token registration request to the server apparatus 10 (step S107). The token control unit 202 transmits the "token registration request" including the biometric information of the user (for example, a face image acquired by capturing an image or a face image read from an identity verification document) and the operation information to the server apparatus 10.

The token control unit 202 receives a response to the token registration request (positive response, negative response) (step S108).

The token control unit 202 performs processing in accordance with the result of the token registration request (step S109).

In a case where a positive response (token registration success) is received, the token control unit 202 notifies the user, for example, that the user is able to receive services using biometric authentication inside or outside the airport.

In a case where a negative response (token registration failure) is received, the token control unit 202 notifies the user, for example, that the registration of the token has failed.

In a case where a positive response (token registration success) is received, the token control unit 202 notifies the user, for example, that the user is able to receive services using biometric authentication inside or outside the airport. However, the token control unit 202 may perform personal identification using biometric authentication after obtaining consent to the third-party provision of personal information. For example, the token control application receives boarding pass information from an airline application. In response to receiving the boarding pass information, the token control application (the token control unit 202) obtains consent from the user to provide the biometric information and the boarding pass information to an external server, while clearly indicating the purpose of use of the acquired boarding pass information. After obtaining the consent, the token control application performs personal identification using the biometric information of the user.

As described above, the token control unit 202 includes a function as consent obtaining means for obtaining consent from the user to provide personal information (operation information and biometric information) of the user to a third party before transmitting a token registration request to the server apparatus 10. In addition, the token control unit 202 includes a function as personal identification means for performing personal identification using biometric information acquired from the user and biometric information acquired from an identity verification document possessed by the user. The token control unit 202 transmits the token registration request to the server apparatus 10 after successfully performing personal identification of the user who desires token registration.

The storage unit 203 is means for storing information necessary for the operation of the terminal 40.

It should be noted that a detailed description of the processing modules for implementing the airport application or the airline application will be omitted. This is because the details of applications other than the token control application fall outside the scope of the present application disclosed.

### [Airport Terminal]

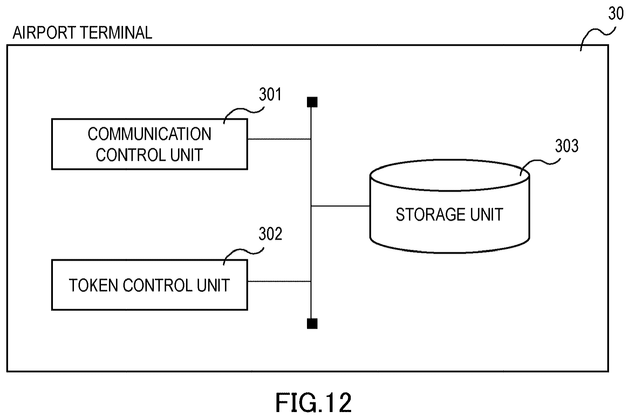

Fig. 12 is a diagram illustrating an example of a processing configuration (processing module) of the airport terminal 30 according to the first example embodiment. Referring to Fig. 12, the airport terminal 30 includes a communication control unit 301, a token control unit 302, and a storage unit 303.

The communication control unit 301 is means for controlling communication with other apparatuses. For example, the communication control unit 301 receives data (packets) from the server apparatus 10. In addition, the communication control unit 301 transmits data to the server apparatus 10. The communication control unit 301 gives data received from other apparatuses to other processing modules. The communication control unit 301 transmits data acquired from other processing modules to other apparatuses. In this way, other processing modules transmit and receive data to and from other apparatuses via the communication control unit 301. The communication control unit 301 includes a function as a receiving unit that receives data from other apparatuses and a function as a transmitting unit that transmits data to other apparatuses.

The token control unit 302 is means for performing control related to a token in the airport terminal 30. The token control unit 302 performs personal identification using biometric information. The operation related to personal identification by the token control unit 302 may be the same as the operation related to personal identification by the token control unit 202 of the terminal 40, and thus a detailed description will be omitted.

The token control unit 302 acquires operation information from a user. For example, the token control unit 302 acquires operation information (for example, an airport member ID) using a GUI.

Alternatively, the token control unit 302 acquires operation information from the terminal 40. For example, the token control unit 302 acquires operation information using a GUI. For example, the token control unit 302 displays a list of services that are available using biometric authentication. The user selects a desired service from the displayed list. For example, the user selects "product purchase using face recognition-based payment."

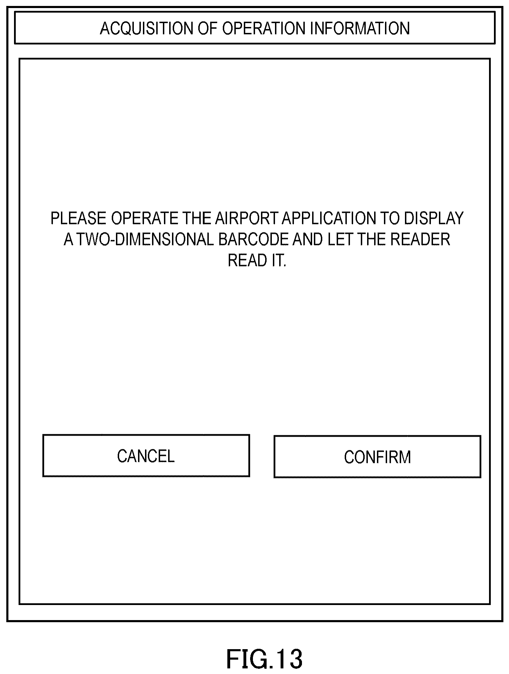

The token control unit 302 acquires operation information in accordance with the service selected by the user. For example, the token control unit 302 acquires operation information using a GUI as shown in Fig. 13.

A user who accesses the GUI shown in Fig. 13 operates the terminal 40 to launch an application designated by the airport terminal 30. The user performs a predetermined operation in the launched application. The terminal 40 displays a two-dimensional barcode in which the operation information is converted, in accordance with the operation of the user. For example, the airport application displays a two-dimensional barcode generated based on an airport member ID.

In a case where the "Confirm" button is pressed in the GUI shown in Fig. 13, the token control unit 302 reads the two-dimensional barcode presented by the user and acquires the operation information.

The token control unit 302 transmits a token registration request including the biometric information and the operation information of the user to the server apparatus 10. The token control unit 302 performs processing in accordance with a response (token registration success, token registration failure) to the token registration request.

The storage unit 303 is means for storing information necessary for the operation of the airport terminal 30.

### [Server Apparatus]

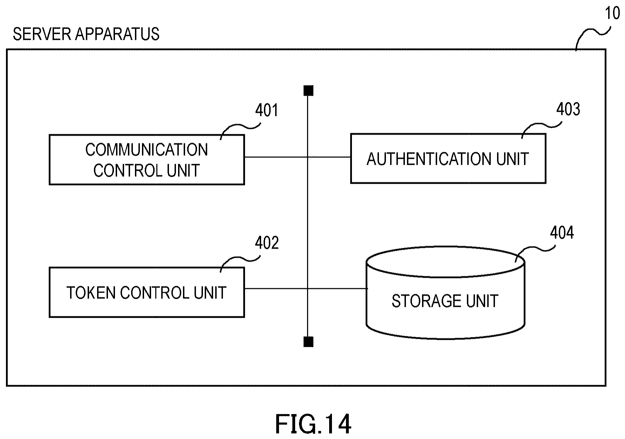

Fig. 14 is a diagram illustrating an example of the processing configuration (processing modules) of the server apparatus 10 according to the first example embodiment. Referring to Fig. 14, the server apparatus 10 includes a communication control unit 401, a token control unit 402, an authentication unit 403, and a storage unit 404.

The communication control unit 401 is means for controlling communication with other apparatuses. For example, the communication control unit 401 receives data (packets) from the authentication terminal 20. In addition, the communication control unit 401 transmits data to the authentication terminal 20. The communication control unit 401 gives data received from other apparatuses to other processing modules. The communication control unit 401 transmits data acquired from other processing modules to other apparatuses. In this way, other processing modules transmit and receive data to and from other apparatuses via the communication control unit 401. The communication control unit 401 includes a function as a receiving unit for receiving data from other apparatuses, and a function as a transmitting unit for transmitting data to other apparatuses.

The token control unit 402 is means for performing control related to tokens in the server apparatus 10. The token control unit 402 processes a token registration request received from the terminal 40 or the airport terminal 30.

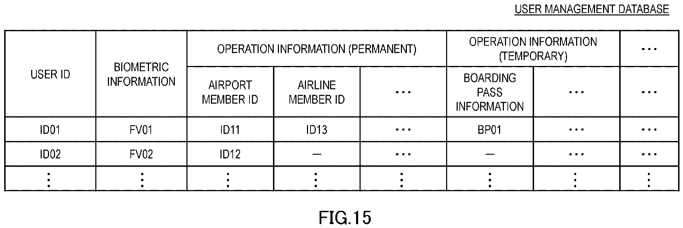

In response to receiving the token registration request, the token control unit 402 registers the biometric information and the operation information included in the token registration request in a user management database (see Fig. 15). As shown in Fig. 15, the user management database stores a user ID, biometric information (feature values), and operation information of a user in association with one another.

As shown in Fig. 15, the user management database classifies and stores the acquired operation information into operation information to be stored permanently and operation information to be stored temporarily. For example, an airport member ID or an airline member ID is operation information that is stored permanently, and boarding pass information is operation information that is stored temporarily (for example, stored only for 24 hours from the time of registration).

A system administrator or the like determines how to classify each piece of operation information into the storage methods and configures the server apparatus 10 accordingly. The system administrator or the like may determine the storage method in consideration of the content (nature) or the like of the operation information. For example, an airport member ID or the like is operation information that is used repeatedly, whereas boarding pass information is operation information that is no longer used once the user boards the aircraft. The system administrator or the like determines the storage method for each piece of operation information in consideration of these circumstances.

The user management database shown in Fig. 15 is an example, and it is not intended to limit the stored items or the like. For example, a "face image" as biometric information may be registered in the user management database.

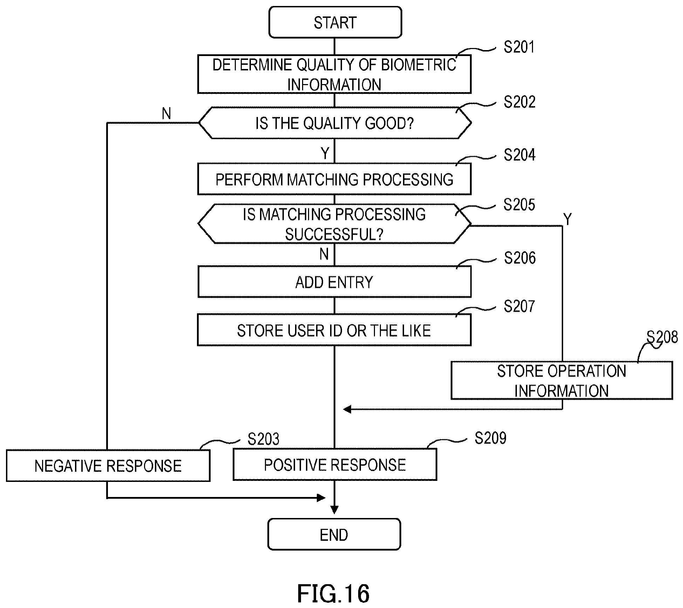

Fig. 16 is a flowchart illustrating an example of an operation of the token control unit 402 according to the first example embodiment. With reference to Fig. 16, the operation of the token control unit 402 will be described.

In a case where a token registration request is received, the token control unit 402 determines the quality of biometric information (a face image) included in the token registration request (step S201).

Specifically, the token control unit 402 determines whether or not the received face image has sufficient quality for use in authentication. For example, the token control unit 402 determines the quality of the face image using a pre-prepared learning model. The token control unit 402 inputs the face image into the learning model and acquires a determination result.

It should be noted that the learning model is obtained through machine learning using a large number of training data in which image data (face images) are labeled with quality labels (good or poor). Any algorithm, such as support vector machine, boosting, or neural network, may be used to generate the learning model. It should be noted that algorithms such as the support vector machine described above may use publicly known techniques, and thus, their detailed explanation will be omitted.

In a case where the quality of the face image is poor (step S202, No branch), the token control unit 402 determines that the token registration has failed. In this case, the token control unit 402 transmits a negative response indicating the token registration failure to the source of the token registration request (step S203).

In a case where the quality of the face image is good (step S202, Yes branch), the token control unit 402 determines whether or not an entry of the user who desires the token registration exists in the user management database.

Specifically, the token control unit 402 performs matching processing (1-to-N matching; N is a positive integer, and the same applies hereinafter) using the biometric information included in the token registration request and the biometric information stored in the user management database (step S204).

The token control unit 402 generates a feature value from the face image included in the token registration request. The token control unit 402 sets the generated feature value (feature vector) as the feature value on the matching side and sets the feature value registered in the user management database as the feature value on the registration side.

The token control unit 402 calculates a similarity between the feature value on the matching side and each of a plurality of feature values on the registration side. It should be noted that the similarity may be calculated using a chi-square distance, a Euclidean distance, or the like. A longer distance represents a lower similarity, and a shorter distance represents a higher similarity.

The token control unit 402 determines that the matching processing has succeeded in a case where there exists at least one feature value, among the plurality of feature values registered in the user management database, whose similarity with the feature value to be matched is equal to or greater than a predetermined value. In a case where no such feature value exists, the token control unit 402 determines that the matching processing has failed.

In a case where the matching processing fails (step S205, No branch), the token control unit 402 adds a new entry to the user management database (step S206).

Thereafter, the token control unit 402 generates a user ID for identifying the user. It should be noted that the user ID may be any information as long as the user ID can uniquely identify the user. For example, the token control unit 402 may assign a unique value each time an entry is added and use the assigned value as the user ID.

The token control unit 402 stores the user ID, biometric information (feature value), and operation information in the added entry (step S207).

In a case where the matching processing succeeds (step S205, Yes branch), the token control unit 402 stores the operation information in the entry identified by the matching processing (the entry in which the biometric information with the highest similarity is stored) (step S208).

In a case where the token is registered in the user management database, the token control unit 402 notifies the source of the token registration request (the airport terminal 30 or the terminal 40) of the successful token registration. Specifically, the token control unit 402 transmits a positive response indicating successful token registration to the source of the token registration request (step S209).

It should be noted that the token control unit 402 includes a function for deleting operation information registered in the user management database. The token control unit 402 accesses the user management database periodically or at a predetermined timing. The token control unit 402 deletes, from among the operation information temporarily stored in each entry (token) in the database, any operation information for which a predetermined time (for example, 24 hours) has elapsed since registration.

The authentication unit 403 is means for authenticating a user (person to be authenticated) who attempts to receive a service via the authentication terminal 20. The authentication unit 403 processes authentication requests received from each authentication terminal 20 (touch point) installed inside or outside the airport.

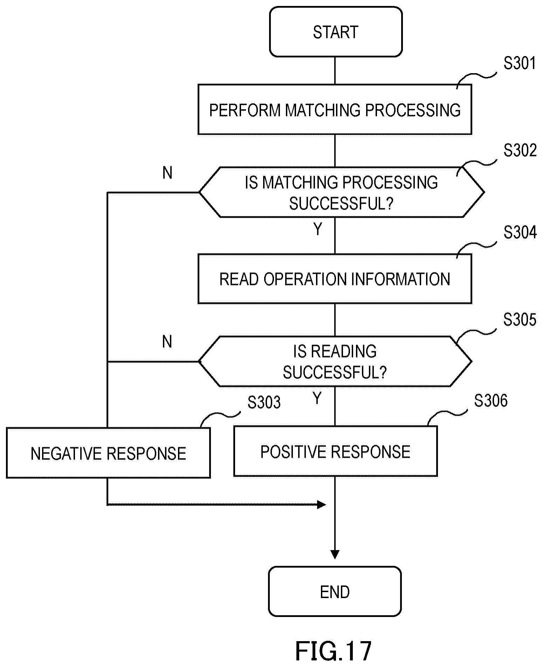

Fig. 17 is a flowchart illustrating an example of an operation of the authentication unit 403 according to the first example embodiment. With reference to Fig. 17, the operation of the authentication unit 403 will be described.

An authentication request includes biometric information of a person to be authenticated and a terminal ID.

The authentication unit 403 performs matching processing (1-toN matching; N is a positive integer, and the same applies hereinafter) using the biometric information included in the authentication request and the biometric information stored in the user management database (step S301).

It should be noted that the matching processing by the authentication unit 403 may be the same as the matching processing by the token control unit 402, and thus, a detailed description thereof is omitted.

In a case where the matching processing fails (step S302, No branch), the authentication unit 403 transmits a negative response indicating authentication failure of the person to be authenticated to the authentication terminal 20 (step S303).

In a case where the matching processing succeeds (step S302, Yes branch), the authentication unit 403 identifies the authentication terminal 20, which is the source of the authentication request, by using the terminal ID included in the authentication request (type of the authentication terminal 20; for example, a POS terminal, a reception terminal, digital signage, a gate apparatus, or the like).

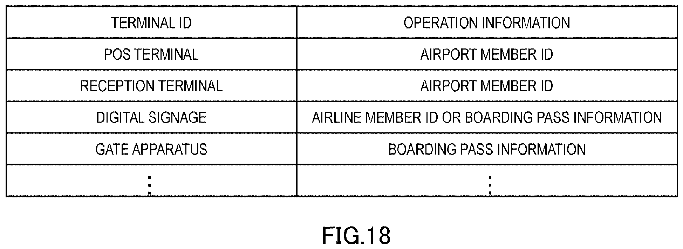

For example, the authentication unit 403 refers to table information in which the type of the authentication terminal 20 is associated with the operation information required by the authentication terminal 20 for providing a service, and specifies the operation information corresponding to the authentication terminal 20 (see Fig. 18). It should be noted that, in Fig. 18, for ease of understanding, the terminal ID indicates the type of each authentication terminal 20 shown in Fig. 3.

The authentication unit 403 attempts to read out the operation information corresponding to the identified authentication terminal 20 from the user management database (step S304).

In a case where the operation information corresponding to the authentication terminal 20 cannot be read out from the user management database (step S305, No branch), the authentication unit 403 determines that the authentication of the person to be authenticated has failed. In this case, the authentication unit 403 transmits a negative response indicating authentication failure of the person to be authenticated to the authentication terminal 20 (step S303).

In a case where the operation information corresponding to the authentication terminal 20 can be read out from the user management database (step S305, Yes branch), the authentication unit 403 determines that the authentication of the person to be authenticated has succeeded. In this case, the authentication unit 403 transmits a positive response indicating authentication success of the person to be authenticated to the authentication terminal 20 (step S306). At that time, the authentication unit 403 transmits a positive response including the operation information read out from the user management database to the authentication terminal 20.

The storage unit 404 stores various types of information necessary for the operation of the server apparatus 10. The user management database is constructed in the storage unit 404.

### [Authentication Terminal]

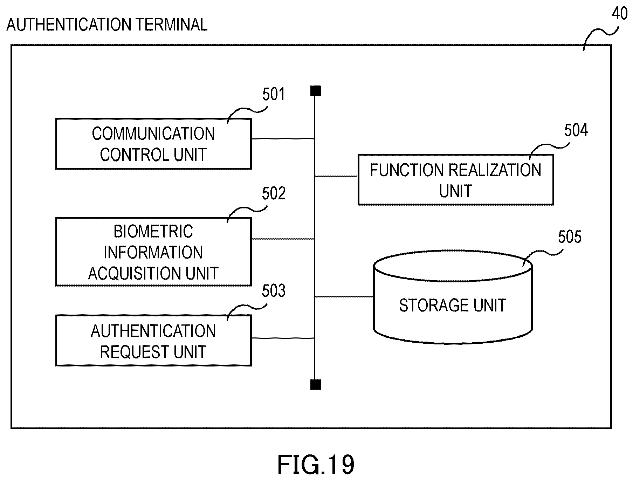

Fig. 19 is a diagram illustrating an example of a processing configuration (processing modules) of the authentication terminal 20 according to the first example embodiment. With reference to Fig. 19, the authentication terminal 20 includes a communication control unit 501, a biometric information acquisition unit 502, an authentication request unit 503, a function realization unit 504, and a storage unit 505.

The communication control unit 501 is means for controlling communication with other apparatuses. For example, the communication control unit 501 receives data (packets) from the server apparatus 10. In addition, the communication control unit 501 transmits data to the server apparatus 10. The communication control unit 501 gives data received from other apparatuses to other processing modules. The communication control unit 501 transmits data acquired from other processing modules to other apparatuses. In this way, other processing modules transmit and receive data to and from other apparatuses via the communication control unit 501. The communication control unit 501 includes a function as a receiving unit for receiving data from other apparatuses, and a function as a transmitting unit for transmitting data to other apparatuses.

The biometric information acquisition unit 502 is means for controlling a camera (not shown) and acquiring biometric information of a user. For example, the biometric information acquisition unit 502 captures an image of a user in front of the terminal in accordance with an operation by a shop staff member or the like. Alternatively, the biometric information acquisition unit 502 captures an image of the area in front of the own apparatus periodically or at a predetermined timing. The biometric information acquisition unit 502 determines whether or not a human face image is included in the acquired image, and in a case where a face image is included, extracts the face image from the acquired image data.

It should be noted that existing techniques may be used for the face image detection processing and face image extraction processing by the biometric information acquisition unit 502, and thus, a detailed description thereof will be omitted. For example, the biometric information acquisition unit 502 may extract a face image (a face area) from the image data by using a learning model learned by a CNN (Convolutional Neural Network). Alternatively, the biometric information acquisition unit 502 may extract a face image by using a technique such as template matching.

The biometric information acquisition unit 502 passes the extracted face image to the authentication request unit 503.

The authentication request unit 503 is means for requesting authentication, related to the user in front of the terminal, from the server apparatus 10. The authentication request unit 503 generates an authentication request including the acquired face image and a terminal ID, and transmits the request to the server apparatus 10.

The authentication request unit 503 receives a response (positive response, negative response) to the authentication request from the server apparatus 10. The authentication request unit 503 passes the received response to the function realization unit 504.

The function realization unit 504 is means for realizing the function assigned to each authentication terminal 20. A detailed description of the operation of the function realization unit 504 of each authentication terminal 20 will be omitted. This is because the operation of each authentication terminal 20 differs from the purpose of the present application disclosed.

The storage unit 505 is means for storing information necessary for the operation of the authentication terminal 20.

### [System Operation]

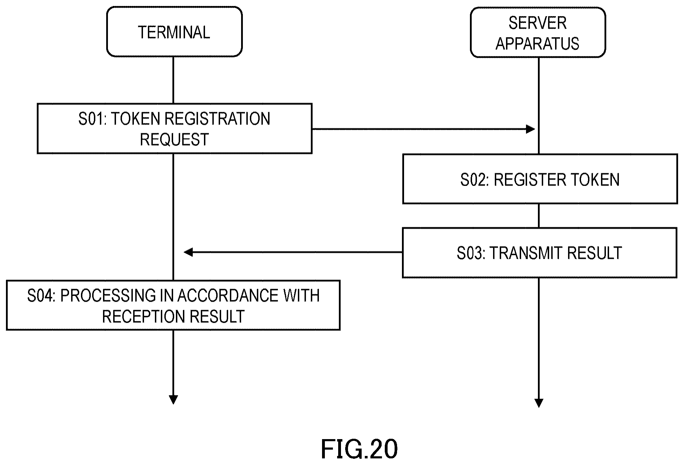

Subsequently, the operation of the information processing system according to the first example embodiment will be described. Fig. 20 is a sequence diagram illustrating an example of the operation of the information processing system according to the first example embodiment. With reference to Fig. 20, the operation of the information processing system in a case where a token registration request is transmitted from the terminal 40 will be described.

The terminal 40 acquires operation information from an application installed in the own apparatus, and transmits a token registration request including the acquired operation information and the like to the server apparatus 10 (step S01).

The server apparatus 10 registers a token in response to reception of the token registration request (step S02).

The server apparatus 10 transmits the result of the token registration processing (token registration success, token registration failure) to the terminal 40 (step S03).

The terminal 40 performs processing corresponding to the received result (token registration success, token registration failure) (step S04).

It should be noted that the user is able to request token registration to the server apparatus 10 a plurality of times using the terminal 40 or the airport terminal 30. For example, the user requests token registration related to an airport member ID to the server apparatus 10 using the terminal 40. Thereafter, the user may request token registration related to an airline member ID to the server apparatus 10 using the airport terminal 30.

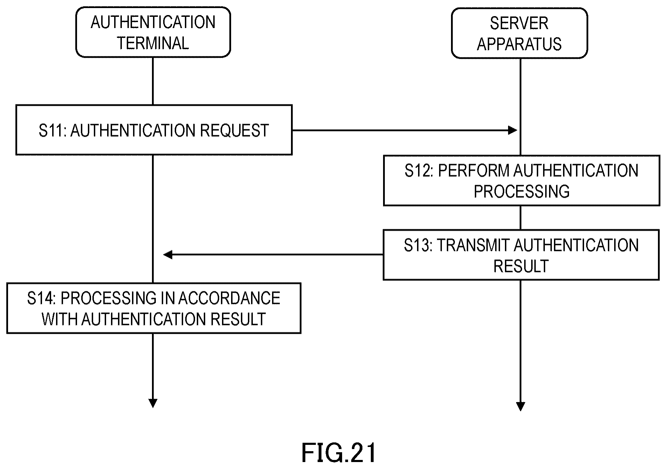

Fig. 21 is a sequence diagram illustrating an example of the operation of the information processing system according to the first example embodiment. With reference to Fig. 21, the operation of the information processing system in a case where authentication processing is performed will be described.

The authentication terminal 20 acquires biometric information of a user and transmits an authentication request including the acquired biometric information to the server apparatus 10 (step S11).

The server apparatus 10 performs authentication processing using the biometric information included in the authentication request and the biometric information and operation information included in the user management database (step S12).

The server apparatus 10 transmits an authentication result (authentication success, authentication failure) to the authentication terminal 20 (step S13).

The authentication terminal 20 performs processing corresponding to the received authentication result (authentication success, authentication failure) (step S14).

Subsequently, a variation of the first example embodiment will be described.

### [Variations]

In the above example embodiment, the case has been described in which the server apparatus 10 transmits operation information related to the installing entity of the authentication terminal 20 that transmits an authentication request to the authentication terminal 20. However, the operation information transmitted by the server apparatus 10 is not limited to the operation information related to the installing entity of the authentication terminal 20.

For example, in a case where the server apparatus 10 receives an authentication request from an authentication terminal 20-1 (POS terminal) installed by an airport company, the server apparatus 10 may transmit an airline member ID to the authentication terminal 20-1 in place of or in addition to an airport member ID. The authentication terminal 20-1 recognizes that the person to be authenticated is a member of the airline by receiving the airline member ID of the person who has succeeded in biometric authentication. In this case, the authentication terminal 20-1 is able to provide benefits, such as a discount on the product price, to members of the airline.

As described above, in the information processing system according to the first example embodiment, operation information preset in the server apparatus 10 is transmitted to the authentication terminal 20 regardless of the installing entity of the authentication terminal 20. As a result, business partnerships or the like between different business operators (service providers) can be easily realized.

For example, consider a case where an airport company A and an airline company B have formed a business partnership. The airport company A can easily construct a system that provides preferential treatment to users (members) of the airline company B among a plurality of airline companies. For example, in a case where a member of the airline company B receives a benefit upon purchasing a product at a shop, the server apparatus 10 may transmit the airline member ID of the airline company B to the authentication terminal 20-1 upon successful authentication from the authentication terminal 20-1. Alternatively, in a case where members of the airline company B are allowed to use a lounge free of charge, the server apparatus 10 may transmit the airline member ID of the airline company B to the authentication terminal 20-2 (reception terminal) in response to processing an authentication request from the authentication terminal 20-2.

In order to realize the provision of a biometric authentication service across a plurality of service providers, a system administrator or the like may rewrite the table information shown in Fig. 18 (may reset the table information).

As described above, the server apparatus 10, in response to receiving a token registration request including a first ID of a first business operator as operation information, associates and stores the biometric information of a user and the first ID the user management database. Furthermore, in response to receiving a token registration request including a second ID of a second business operator as operation information, the server apparatus 10 associates and stores the biometric information of the user, the first ID and the second ID in the user management database.

As described above, the terminal 40 according to the first example embodiment acquires operation information necessary for receiving a service using biometric authentication from an application installed in the own apparatus (for example, a smartphone). The terminal 40 transmits the acquired operation information and the biometric information of the user to the server apparatus 10 and requests registration of a token. The information processing system according to the first example embodiment registers, in the system (server apparatus 10), the operation information that is stored in a distributed manner in the terminal 40 possessed by an individual, via a token control application. Therefore, it is not necessary for the system of the service provider to transmit operation information that is centrally managed to the server apparatus 10. As a result, system registration of the information necessary for providing a service using biometric authentication is easily realized.

In a case where a service provider offers various services using biometric authentication to a user, a problem arises as to how operation information (for example, membership information) corresponding to each service should be registered in the system. To address this problem, the information processing system according to the first example embodiment collects, via a token control application, the operation information stored in a distributed manner in the terminal 40, and registers the collected operation information in the server apparatus 10. By adopting such a configuration, it becomes possible to easily start a new service using biometric authentication. That is, in recent years, due to growing awareness of personal information among users, there is a tendency for necessary information to be registered in smartphones or the like. This tendency is expected to continue in the future. If the operation information necessary for services using biometric authentication is acquired from the terminal 40 such as a smartphone, it becomes possible to register the information necessary for biometric authentication in the system without implementing large-scale system coordination or the like.

In addition, via biometric information of a user, the server apparatus 10 according to the first example embodiment stores information of each service provider (for example, membership IDs or the like) in an associated manner. That is, membership information (membership IDs) of each service provider is in a loosely coupled state, in which the information is mutually associated while remaining independent of each individual system. By storing such membership information (membership IDs) in a loosely coupled state, the server apparatus 10 is able to facilitate cooperation among the service providers. Specifically, cooperation among the service providers can be easily realized by the system administrator or the like rewriting table information such as that shown in Fig. 18. In a case where the authentication process is successful, the server apparatus 10 may transmit membership information of another service provider that is associated with the relevant service provider, to the authentication terminal 20 (a device installed by the service provider), in accordance with the rewritten table information.

### [Second Example Embodiment]

Next, a second example embodiment will be described in detail with reference to drawings.

In the first example embodiment, a case has been described in which an application installed in the terminal 40 sends (push-notifies) operation information to the token control application. In the second example embodiment, a case will be described in which the token control application requests the provision of operation information from another application.

It should be noted that the configuration of the information processing system according to the second example embodiment may be the same as that in the first example embodiment, and therefore, description corresponding to Fig. 3 will be omitted. In addition, the processing configuration of the server apparatus 10 and the like in the second example embodiment may also be the same as that in the first example embodiment, and therefore, the description thereof will be omitted.

The following description will be made with a focus on the difference between the first example embodiment and the second example embodiment.

The terminal 40 displays a list of services that can be provided using biometric authentication to a user and acquires a service desired to be received by the user from among the displayed list of services. The terminal 40 acquires, from among the applications installed in its own apparatus, operation information necessary for the provision of the acquired service (the service selected by the user).

Specifically, the token control unit 202 of the terminal 40, in a case where the user performs a predetermined operation, displays a list of services (services using biometric information) that can be provided to the user, using operation information acquired from applications installed in its own apparatus.

At that time, the token control unit 202 acquires information of applications installed in the terminal 40. For example, the token control unit 202 acquires information such as names and versions of applications installed in the terminal 40 from the OS (Operating System).

Next, the token control unit 202 refers to table information in which operation information obtained from applications installed in the terminal 40 and services that can be provided to the user are associated and stored. The token control unit 202 refers to the table information and generates a list of services that can be provided to the user using operation information obtained from other applications.

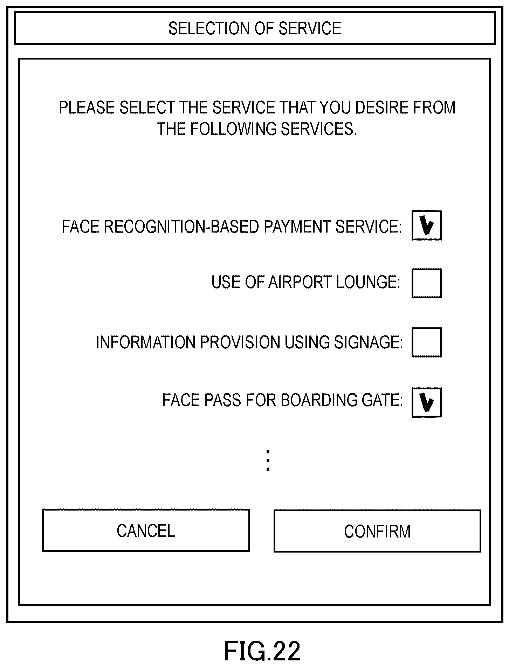

The token control unit 202 displays a GUI as shown in Fig. 22 using the generated list of services. The token control unit 202 acquires information of a service that the user desires to receive by using the GUI.

The token control unit 202 requests provision of operation information from an application that stores the operation information necessary for the service desired by the user. The token control unit 202 acquires the necessary operation information from other applications using a Deep Link, an API, or the like.

Upon acquiring the operation information, the token control unit 202 performs personal identification of the user. The token control unit 202 performs personal identification using a face image obtained by capturing an image of the user and a face image obtained from an identity verification document.

In a case where personal identification is successful, the token control unit 202 obtains user consent for third-party provision of personal information (biometric information and operation information). The token control unit 202 obtains user consent using a GUI similar to those shown in Fig. 6 or Fig. 7.

In a case where user consent is obtained, the token control unit 202 transmits a token registration request including biometric information and operation information to the server apparatus 10.

It should be noted that also in the second example embodiment, as in the first example embodiment, the token control unit 202 may perform personal identification using biometric information of the user after obtaining consent for third-party provision of personal information. In this case, the token control unit 202 may obtain user consent for third-party provision of personal information through the list display screen as shown in Fig. 22. For example, the token control unit 202 may display "biometric information to be provided to third parties," as well as "operation information to be provided to third parties" and "purpose of use of personal information (biometric information and operation information)" for each service that can be provided.

As described above, the terminal 40 according to the second example embodiment presents the user with a list of services that can be provided based on operation information that can be collected from applications installed in its own apparatus. The terminal 40 acquires operation information corresponding to the service selected by the user from the application, and registers the acquired operation information in the server apparatus 10. Also in the second example embodiment, system registration of information necessary for providing services using biometric authentication is easily realized.

### [Third Example Embodiment]

Next, a third example embodiment will be described in detail with reference to drawings.

In the third example embodiment, a case will be described in which the server apparatus 10 provides a behavior history of a user to a service business operator or the like.

It should be noted that the configuration of the information processing system according to the third example embodiment may be the same as that of the first and second example embodiments, and therefore, the description corresponding to Fig. 3 will be omitted.

The following description will be made with a focus on the difference from the first example embodiment to the third example embodiment.

The authentication unit 403 according to the third example embodiment stores, in a behavior history management database, details of the authentication processing performed in accordance with the reception of an authentication request. The authentication unit 403 generates a behavior history of the user by storing the details of the authentication processing.

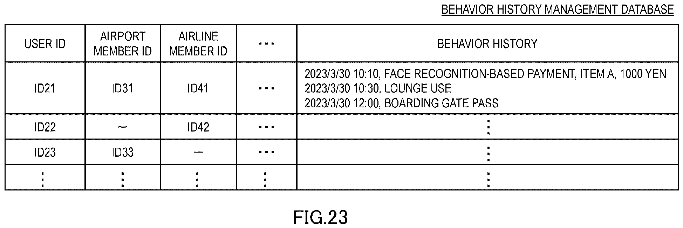

For example, the authentication unit 403 stores, in a behavior history management database, information such as the date and time of a successful biometric authentication and information related to the authentication terminal 20 used by the person to be authenticated (for example, the installation location and type) (see Fig. 23). Alternatively, in a case where the authentication unit 403 is able to acquire, from the authentication terminal 20, additional information such as settlement information in addition to biometric information, the authentication unit 403 also stores the additional information in the behavior history management database.

In a case where the authentication unit 403 succeeds in authenticating the person to be authenticated, the authentication unit 403 searches the behavior history management database using the user ID of the person to be authenticated as a key. In a case where the search is successful, the authentication unit 403 stores the behavior history in an entry identified by the search.

In a case where the search fails, the authentication unit 403 adds a new entry to the behavior history management database. The authentication unit 403 stores, in the newly added entry, the user ID of the user and information corresponding to an ID by which a service provider manages the user, among the operation information stored in the user management database. In the example of the user management database shown in Fig. 15, the authentication unit 403 stores an airport membership ID (member ID of the airport company) and an airline membership ID (member ID of the airline company) in the behavior history management database. In addition, the authentication unit 403 stores the behavior history of the user in the newly added entry.

The authentication unit 403 generates the behavior history as shown in the behavior history management database of Fig. 23. It should be noted that the behavior history management database shown in Fig. 23 is an example, and is not intended to limit the items to be stored or the like.

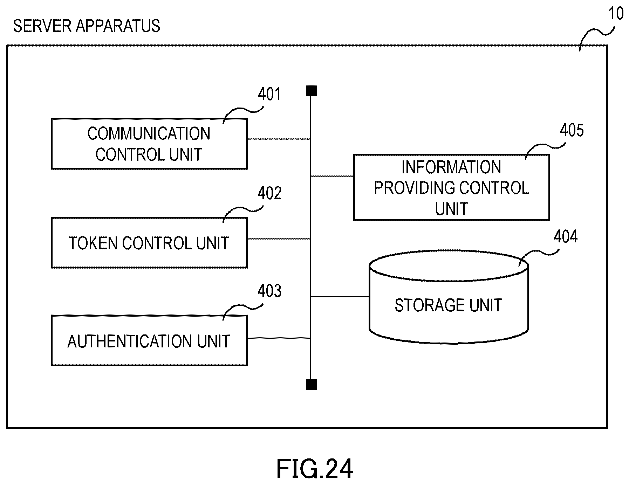

Fig. 24 is a diagram for illustrating an example of a processing configuration (processing modules) of the server apparatus 10 according to the third example embodiment. Referring to Fig. 24, an information providing control unit 405 is added to the configuration of the server apparatus 10 according to the first example embodiment.

The information providing control unit 405 is means for providing information related to the behavior of a user based on a request from a service provider or the like participating in the system. The information providing control unit 405 generates providing information using a behavior history stored in the behavior history management database and outputs the generated providing information.

The information providing control unit 405 acquires a request related to the provision of information from a service provider. For example, the information providing control unit 405 acquires a request related to information provision from a service provider by using a portal site or the like that can be accessed by a person in charge or the like of the service provider.

The information providing control unit 405 acquires the ID of a user whose behavior history is desired to be known by a service provider. For example, an airport company inputs into a portal site the ID (a list of IDs) of a user who is a member of the company and whose behavior history the company desires to know.

The information providing control unit 405 searches the behavior history management database using the acquired ID (list of IDs) as a key and identifies a corresponding entry. The information providing control unit 405 provides the behavior history stored in the behavior history field of the identified entry to the service provider.

As described above, the server apparatus 10 according to the third example embodiment generates a behavior history of the person to be authenticated by using at least information related to the authentication terminal 20 in a case where the biometric authentication of the person to be authenticated succeeds. The server apparatus 10 stores the first ID of the person to be authenticated, the second ID, and the generated behavior history in the behavior history management database (the second database) in association with each other. In a case where the server apparatus 10 acquires the first ID from a first business operator, the server apparatus 10 reads out the behavior history of the user corresponding to the first ID from the behavior history management database, and provides the read-out behavior history to the first business operator. As a result, the behavior history related to a plurality of service business operators is easily collected. That is, by utilizing the information provided from the server apparatus 10 according to the third example embodiment, analysis of data spanning a plurality of business operators becomes possible. For example, an airport company and a railway company are able to perform data analysis from the perspective of MaaS (Mobility as a Service). It should be noted that the plurality of business operators may or may not be cooperating with each other.

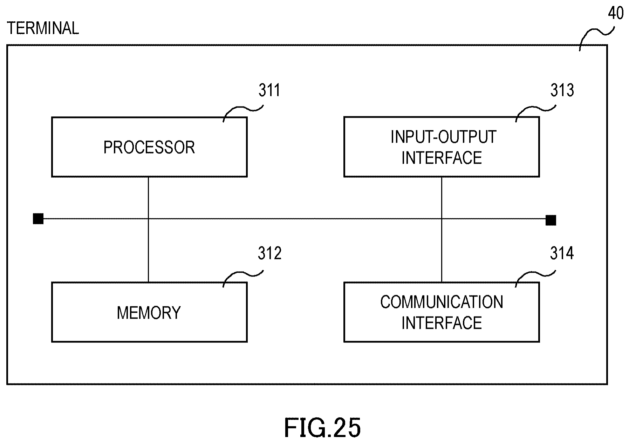

Next, a hardware configuration of an individual apparatus that constitutes the information processing system will be described. Fig. 25 is a diagram illustrating an example of a hardware configuration of the terminal 40.

The terminal 40 can be configured by an information processing apparatus (a so-called computer) and has a configuration illustrated as an example in Fig. 25. For example, the terminal 40 includes a processor 311, a memory 312, an input-output interface 313, a communication interface 314, etc. The above-described components such as the processor 311 are connected via an internal bus or the like and are configured to be capable of communicating with each other.

However, the configuration shown in Fig. 25 is not intended to limit the hardware configuration of the terminal 40. The terminal 40 may include hardware not illustrated in the figure, and may omit the input-output interface 313 as needed. In addition, the number of components such as the processor 311 included in the terminal 40 is not intended to be limited to the example shown in Fig. 25, and, for example, a plurality of processors 311 may be included in the terminal 40.

For example, the processor 311 is a programmable device such as a CPU (Central Processing Unit), an MPU (Micro Processing Unit), or a DSP (Digital Signal Processor). Alternatively, the processor 311 may be a device such as an FPGA (Field Programmable Gate Array) or an ASIC (Application Specific Integrated Circuit). The processor 311 executes various kinds of programs including an operating system (OS).

The memory 312 is a RAM (Random Access Memory), a ROM (Read-Only Memory), an HDD (Hard Disk Drive), an SSD (Solid State Drive), or the like. The memory 312 stores an OS program, an application program, and various kinds of data.

The input-output interface 313 is an interface for a display apparatus and an input apparatus not illustrated. The display apparatus is, for example, a liquid crystal display or the like. For example, the input apparatus is an apparatus that receives user operations, and examples of the input apparatus include a keyboard and a mouse.

The communication interface 314 is a circuit, a module, and so on for performing communication with other apparatuses. For example, the communication interface 314 includes an NIC (Network Interface Card) or the like.

The functions of the terminal 40 are realized by various kinds of processing modules. The processing modules are realized, for example, by causing the processor 311 to execute a program stored in the memory 312. In addition, this program can be recorded in a computer-readable storage medium. The storage medium may be a non-transient (non-transitory) storage medium, such as a semiconductor memory, a hard disk, a magnetic recording medium, or an optical recording medium. That is, the present invention can be embodied as a computer program product. In addition, the above program may be updated by downloading a program via a network or by using a storage medium in which a program is stored. In addition, the above processing modules may be realized by semiconductor chips.

It should be noted that the server apparatus 10 and the like can also be configured by an information processing apparatus in the same manner as the terminal 40, and since the basic hardware configuration thereof is not different from that of the terminal 40, the description will be omitted.

The terminal 40, which is an information processing apparatus, includes a computer, and the functions of the terminal 40 can be realized by causing the computer to execute a program. In addition, the terminal 40 executes a terminal control method by using this program.

### [Variations]

It should be noted t the configurations, operations, and the like of the information processing system according to the above example embodiments are examples and do not limit the present system configuration or the like.

In the above example embodiments, the operation of the information processing system disclosed in the present application is described by taking an authentication system at an airport as an example. However, the information processing system disclosed in the present application may target facilities other than airports. For example, the information processing system may target an authentication system at a large-scale station such as a terminal station. Alternatively, the information processing system may target an authentication system at an event venue or the like.

In the above example embodiments, the information processing system disclosed in the present application is described by taking an airport where domestic flights arrive and depart as an example. However, the information processing system disclosed in the present application may target an airport where international flights arrive and depart. In this case, the user only needs to register passport information stored in the terminal 40 as operation information in the server apparatus 10.

In the above example embodiments, the explanation is given by taking an airport application and an airline application as examples of applications other than the token control application. However, it is natural that the applications installed in the terminal 40 are not intended to be limited to these applications. The token control application is able to acquire operation information from any application installed in the terminal 40. For example, the token control application may acquire operation information from a train application used by a member of a railway company.

In the above example embodiments, the case where a system administrator sets the storage method (permanent storage, temporary storage) of each piece of operation information in the server apparatus 10 is described. The selection of the storage method may be performed by the user themself. For example, the terminal 40 may allow the user to select the storage method of the operation information at the time of acquiring the user's consent regarding third-party provision of personal information through the GUI shown in Fig. 6 or Fig. 7.

In the second example embodiment, it is described that a list of services that can be provided using operation information obtained from applications installed in the terminal 40 is presented to the user (see Fig. 22). However, the terminal 40 may generate a list of services (services using biometric authentication) that can be provided to the user by the system and display a GUI. In addition, in a case where the user selects a service that uses operation information obtainable from an application that is not installed in the terminal 40, the terminal 40 may prompt the user to install the uninstalled application. For example, in a case where a "face pass at the boarding gate" using boarding information obtainable from an airline application is selected and the airline application is not installed in the terminal 40, the terminal 40 prompts installation of the airline application. It should be noted that even in a case where a list of services that can be provided to the user by the system is presented to the user, the terminal 40 may perform personal identification using biometric information after obtaining the user's consent for third-party provision of personal information, as described in the second example embodiment.

Alternatively, the terminal 40 may prompt the user to update the version of the application in case where the version of the application installed in the own apparatus is old and cannot acquire appropriate operation information, or the like.

In the above example embodiments, a case where the server apparatus 10 performs quality verification related to biometric information at the time of token issuance (at the time of token registration) has been described. The quality verification may also be performed by the airport terminal 30 or the terminal 40.

In the above example embodiments, a case where biometric information related to a face image is transmitted and received between the server apparatus 10 and the authentication terminal 20 has been described. However, a feature value generated from the face image may be transmitted and received between the above apparatuses. In this case, the server apparatus 10 on the receiving side may use the received feature value and may utilize the received feature value in subsequent processing. Alternatively, the biometric information stored in the user management database may be a feature value or may be a face image. In a case where a face image is stored, a feature value may be generated from the face image as needed. Alternatively, both the face image and the feature value may be stored in the user management database.

In the above example embodiment, a case where a user management database is configured inside the server apparatus 10 has been described, but the user management database may be constructed in an external database server or the like. That is, some of the functions of the server apparatus 10 or the like may be implemented in another server. More specifically, the "token control unit (token control means)" described above or the like may be implemented in any one of the apparatuses included in the system.

The form of data transmission and reception among the apparatuses (the server apparatus 10, the terminal 40, or the like) is not particularly limited, but data transmitted and received among these apparatuses may be encrypted. Since biometric information or the like is transmitted and received among these apparatuses, it is desirable that encrypted data be transmitted and received in order to appropriately protect personal information.

In the flowcharts and sequence diagrams used in the above description, a plurality of steps (processes) are sequentially described. However, the order of the execution of the steps performed in the individual example embodiment is not limited to the described order. In the individual example embodiment, the order of the illustrated steps may be changed to the extent that a problem is not caused on the content of the individual example embodiment. For example, individual processes may be executed in parallel.

The above example embodiments have been described in detail to facilitate the understanding of the present application disclosed and not to mean that all the configurations described above are needed. In addition, if a plurality of example embodiments have been described, each of the example embodiments may be used individually or a plurality of example embodiments may be used in combination. For example, part of a configuration according to one example embodiment may be replaced by a configuration according to another example embodiment. For example, a configuration according to one example embodiment may be added to a configuration according to another example embodiment. In addition, addition, deletion, or replacement is possible between part of a configuration according to one example embodiment and another configuration.

The industrial applicability of the present invention has been made apparent by the above description. That is, the present invention is suitably applicable, for example, to an information processing system or the like that provides a user with a service using biometric authentication.

A part or the entirety of the example embodiments described above may be described as in the following supplementary notes, but is not limited to the followings.

### [Supplementary Note 1]

A terminal including:
an acquisition means that acquires operation information necessary for a user to receive a service using biometric authentication from an application installed in own apparatus; and
a transmission means that transmits a token registration request including the acquired operation information and biometric information of the user to a server apparatus.

### [Supplementary Note 2]

The terminal according to supplementary note 1, further including a consent obtaining means that obtains consent from the user to provide the operation information and the biometric information to a third party before transmitting the token registration request to the server apparatus.

### [Supplementary Note 3]

The terminal according to supplementary note 2, further including a personal identification means that performs personal identification using biometric information acquired from the user and biometric information acquired from an identity verification document possessed by the user, and
wherein the transmission means transmits the token registration request to the server apparatus after successfully performing the personal identification.

### [Supplementary Note 4]

The terminal according to supplementary note 3, wherein
the acquisition means displays a list of services that can be provided using the biometric authentication to the user, acquires a service desired to be received by the user from among the displayed list of services, and acquires, from among the applications installed in the own apparatus, the operation information necessary for the provision of the acquired service.

### [Supplementary Note 5]

A system including:
a server apparatus; and
a terminal possessed by a user, and
wherein the terminal acquires operation information necessary for the user to receive a service using biometric authentication from an application installed in own apparatus, and transmits a token registration request including the acquired operation information and biometric information of the user to the server apparatus, and
wherein the server apparatus, in response to a reception of the token registration request, associates and stores the biometric information of the user and the operation information in a first database.

### [Supplementary Note 6]

The system according to supplementary note 5, wherein
the server apparatus, in response to receiving the token registration request including a first ID of a first business operator as the operation information, associates and stores the biometric information of the user and the first ID in the first database, and
wherein the server apparatus, in response to receiving the token registration request including a second ID of a second business operator as the operation information, associates and stores the biometric information of the user, the first ID and the second ID in the first database.

### [Supplementary Note 7]

The system according to supplementary note 6, wherein
the server apparatus receives an authentication request including biometric information of a person to be authenticated from an authentication terminal, specifies the person to be authenticated by matching processing using the biometric information included in the received authentication request and the biometric information stored in the first database, and transmits, to the authentication terminal, the operation information corresponding to the authentication terminal among at least one or more pieces of the operation information of the person to be authenticated, which are stored in the first database.

### [Supplementary Note 8]

The system according to supplementary note 7, wherein the server apparatus generates a behavior history of the person to be authenticated by using at least information related to the authentication terminal in a case where the biometric authentication of the person to be authenticated succeeds, and stores the first ID of the person to be authenticated, the second ID, and the generated behavior history in a second database in association with each other.

### [Supplementary Note 9]

The system according to supplementary note 8, wherein in a case where the server apparatus acquires the first ID from the first business operator, the server apparatus reads out the behavior history of the user corresponding to the first ID from the second database, and provides the read-out behavior history to the first business operator.

### [Supplementary Note 10]

The system according to any one of supplementary notes 5 to 9, wherein the biometric information is a face image or a feature value generated from the face image.

### [Supplementary Note 11]

A control method of a terminal, the control method including:
acquiring operation information necessary for a user to receive a service using biometric authentication from an application installed in own apparatus; and
transmitting a token registration request including the acquired operation information and biometric information of the user to a server apparatus.

### [Supplementary Note 12]

A computer-readable storage medium storing a program causing a computer mounted on a terminal to perform processing for:
acquiring operation information necessary for a user to receive a service using biometric authentication from an application installed in own apparatus; and
transmitting a token registration request including the acquired operation information and biometric information of the user to a server apparatus.

The entire disclosure of the above patent literature is incorporated herein by reference thereto. While the example embodiments of the present invention have thus been described, the present invention is not limited to these example embodiments. It is to be understood to those skilled in the art that these example embodiments are only examples and that various variations are possible without departing from the scope and spirit of the present invention. That is, the present invention of course includes various variations and modifications that could be made by those skilled in the art in accordance with the overall disclosure including the claims and the technical concept.

### [Reference Signs List]

10 server apparatus
20 authentication terminal
20-1 authentication terminal
20-2 authentication terminal
20-3 authentication terminal
20-4 authentication terminal
30 airport terminal
40 terminal
100 terminal
101 acquisition means
102 transmission means
201 communication control unit
202 token control unit
203 storage unit
301 communication control unit
302 token control unit
303 storage unit
311 processor
312 memory
313 input-output interface
314 communication interface
401 communication control unit
402 token control unit
403 authentication unit
404 storage unit
405 information providing control unit
501 communication control unit
502 biometric information acquisition unit
503 authentication request unit
504 function realization unit
505 storage unit

## Claims

1. A terminal comprising:
an acquisition means that acquires operation information necessary for a user to receive a service using biometric authentication from an application installed in own apparatus; and
a transmission means that transmits a token registration request including the acquired operation information and biometric information of the user to a server apparatus.

2. The terminal according to claim 1, further comprising a consent obtaining means that obtains consent from the user to provide the operation information and the biometric information to a third party before transmitting the token registration request to the server apparatus.

3. The terminal according to claim 2, further comprising a personal identification means that performs personal identification using biometric information acquired from the user and biometric information acquired from an identity verification document possessed by the user,
and wherein the transmission means transmits the token registration request to the server apparatus after successfully performing the personal identification.

4. The terminal according to claim 3, wherein the acquisition means displays a list of services that can be provided using the biometric authentication to the user, acquires a service desired to be received by the user from among the displayed list of services, and acquires, from among the applications installed in the own apparatus, the operation information necessary for the provision of the acquired service.

5. A system comprising:
a server apparatus; and
a terminal possessed by a user, and
wherein the terminal acquires operation information necessary for the user to receive a service using biometric authentication from an application installed in own apparatus, and transmits a token registration request including the acquired operation information and biometric information of the user to the server apparatus, and
wherein the server apparatus, in response to a reception of the token registration request, associates and stores the biometric information of the user and the operation information in a first database.

6. The system according to claim 5, wherein the server apparatus, in response to receiving the token registration request including a first ID of a first business operator as the operation information, associates and stores the biometric information of the user and the first ID in the first database, and
wherein the server apparatus, in response to receiving the token registration request including a second ID of a second business operator as the operation information, associates and stores the biometric information of the user, the first ID and the second ID in the first database.

7. The system according to claim 6, wherein the server apparatus receives an authentication request including biometric information of a person to be authenticated from an authentication terminal, specifies the person to be authenticated by matching processing using the biometric information included in the received authentication request and the biometric information stored in the first database, and transmits, to the authentication terminal, the operation information corresponding to the authentication terminal among at least one or more pieces of the operation information of the person to be authenticated, which are stored in the first database.

8. The system according to claim 7, wherein the server apparatus generates a behavior history of the person to be authenticated by using at least information related to the authentication terminal in a case where the biometric authentication of the person to be authenticated succeeds, and stores the first ID of the person to be authenticated, the second ID, and the generated behavior history in a second database in association with each other.

9. The system according to claim 8, wherein in a case where the server apparatus acquires the first ID from the first business operator, the server apparatus reads out the behavior history of the user corresponding to the first ID from the second database, and provides the read-out behavior history to the first business operator.

10. The system according to any one of claims 5 to 9, wherein the biometric information is a face image or a feature value generated from the face image.

11. A control method of a terminal, the control method comprising:
acquiring operation information necessary for a user to receive a service using biometric authentication from an application installed in own apparatus; and
transmitting a token registration request including the acquired operation information and biometric information of the user to a server apparatus.

12. A computer-readable storage medium storing a program causing a computer mounted on a terminal to perform processing for:
acquiring operation information necessary for a user to receive a service using biometric authentication from an application installed in own apparatus; and
transmitting a token registration request including the acquired operation information and biometric information of the user to a server apparatus.
